# EUROPÄISCHE PATENTSCHRIFT

(11) **EP 3 363 277 B1**
(45) Veröffentlichungstag und Bekanntmachung des Hinweises auf die Patenterteilung: **16.10.2019**
(21) Anmeldenummer: 17156591.4
(22) Anmeldetag: 17.02.2017
(51) Int. Cl.: A01D 45/02

(54) **VORRICHTUNG ZUR ERNTE VON STÄNGELIGEM HALMGUT**
EQUIPMENT FOR HARVESTING STALKY STEM MATERIAL
DISPOSITIF DE RÉCOLTE DE PAILLE SUR TIGE

(43) Veröffentlichungstag der Anmeldung: 22.08.2018
(73) Patentinhaber: Carl Geringhoff GmbH & Co. KG, 59227 Ahlen (DE)
(72) Erfinder: TIESSEN, Reimer Uwe, 26135 Oldenburg (DE); Hemmesmann, André, 483336 Sassenberg (DE)
(74) Vertreter: Weeg, Thomas

(56) Entgegenhaltungen:
- EP-A1- 2 859 787
- EP-A2- 1 397 951
- DE-A1-102011 051 792
- DE-B3-102014 015 294
- DE-U1- 20 305 666

## Beschreibung

Die vorliegende Erfindung bezieht sich auf eine Erntevorrichtung zum Schneiden und Einziehen von stängeligem Halmgut, wobei das Einziehen entlang eines Förderweges mittels mehrerer nebeneinander angeordneter Einzugseinheiten erfolgt, die zusammen eine Gesamtarbeitsbreite der Erntevorrichtung und einzeln oder mit mehreren Einzugseinheiten für einen jeweiligen Förderweg eine Teilarbeitsbreite definieren, und zum Abtrennen von Fruchtständen von den Halmen des stängeligen Halmguts, wobei das Abtrennen der Fruchtstände in Pflückspalten erfolgt, die jeweiligen Einzugseinheiten zugeordnet sind.

Gattungsgemäße Erntevorrichtungen sind insbesondere als Maispflücker in vielfältigen Ausgestaltungen bekannt. Die Erntevorrichtungen werden beispielsweise genutzt, um Maispflanzen als stängeliges Halmgut zu schneiden, die geschnittenen Maispflanzen in die Erntevorrichtung einzuziehen, danach die Maiskolben von den Stängeln abzutrennen und nur die Maiskolben in eine nachgeordnete Dresch- und Reinigungsvorrichtung wie beispielsweise einen Mähdrescher abzufördern. Die Maispflücker werden zur Maisernte als Vorsatzgeräte an Mähdrescher angebaut, damit die Maiskolben während des Dresch- und Reinigungsvorganges von den Spindeln und den Lieschblättern und sonstigen Verunreinigungen getrennt und gereinigt werden, um Körnermais zu erhalten. Die Stängel und Blätter der Maispflanzen werden üblicherweise schon vom Maispflücker gehäckselt und zerkleinert auf das Feld abgeworfen.

Ein Beispiel einer vorbekannten Erntevorrichtung ist in der Schrift DE 203 05 666 U1 offenbart. Die Einzugseinheiten dieser Erntevorrichtung sind in gleichmäßigen Abständen zueinander angeordnet. In diesem Ausführungsbeispiel begrenzen zwei benachbart zueinander angeordnete Einzugseinheiten zwischen sich einen Pflückspalt, der sich in einer Ebene unterhalb der Einzugseinheiten befindet und dessen Verlauf dem Förderweg des Halmguts an den Einzugseinheiten entlang entspricht. Die Einzugseinheiten bestehen im Ausführungsbeispiel aus paarweise angeordneten endlos umlaufenden Kettenförderern, an denen in Abständen zueinander Mitnehmer befestigt sind. Die paarweise angeordneten Kettenförderer begrenzen zwischen sich oberhalb des Pflückspaltes jeweils einen Förderweg, den die geschnittenen Stängel und die bereits vom Stängel abgetrennten Fruchtstände entlang befördert werden. Aus dem gleichmäßigen Abstand der paarweise angeordneten Einzugseinheiten zueinander folgt eine immer gleiche Teilarbeitsbreite, die die Einzugseinheiten für einen jeweiligen Förderweg definieren. Die Teilarbeitsbreiten summieren sich zur Gesamtarbeitsbreite der Erntevorrichtung auf. Die Teilarbeitsbreiten werden durch die Spitzen von Halmteilern markiert, die in Fahrtrichtung vor den Einzugseinheiten angeordnet sind. Die Teilarbeitsbreiten sind so gewählt, dass sie dem häufig anzutreffenden Reihenabstand von 75 cm bzw. 30 Inch entsprechen, in denen Maispflanzen häufig ausgesät werden. Die Erntevorrichtung wird so durch den Erntegutbestand bewegt, dass die zu schneidenden Stängel am vordersten Punkt des Förderweges in den Wirkbereich der Einzugseinheiten einlaufen. Die Erntevorrichtung folgt dabei dem Verlauf der Reihen des stängeligen Halmguts, wie es auf dem Feld gewachsen ist. Die Ernte erfolgt mit dieser Erntevorrichtung also reihenabhängig.

Ein weiteres Beispiel einer vorbekannten Erntevorrichtung ist in der Schrift DE 10 2011 051 792 A1 offenbart. Dort ist ein Maispflücker als Erntevorrichtung offenbart, der ein Feld mit stängeligem Halmgut auch reihenunabhängig abernten kann. Als Einzugseinheiten sind dort Fördersterne verwendet, die rotierend angetrieben sind. Jeweils zwei Fördersterne fördern geschnittenes Halmgut einem gemeinsamen Förderweg zu, der etwa an dem Punkt beginnt, an dem sich die Fördersterne am nächsten sind. Die beiden Fördersterne, die einen gemeinsamen Förderweg beschicken, decken eine Teilarbeitsbreite der Erntevorrichtung ab. Auch bei dieser Erntevorrichtung markieren den Fördersternen in Fahrtrichtung vorgeordnete Halmteiler die Teilarbeitsbreite. Die verschiedenen von paarigen Fördersternen definierten Teilarbeitsbreiten summieren sich zu einer Gesamtarbeitsbreite der Erntevorrichtung auf. Auch bei dieser Erntevorrichtung sind die Teilarbeitsbreiten gleich breit. Sie entsprechen jeweils einer Breite von 1,50 m, so dass mit der Erntevorrichtung auch reihenabhängig geerntet werden kann, indem die Erntevorrichtung so in den stehenden Bestand des Ernteguts gesteuert wird, dass zwei in einem Abstand von 75 cm stehende Halmgutreihen in eine Teilarbeitsbreite einlaufen und jeweils eine Reihe des Halmguts von einem Förderstern eingezogen, mitgenommen und abgefördert wird. Dieser Maispflücker weist die Besonderheit auf, dass die jeweiligen Pflückspalte eines zugehörigen Förderwegs in Fahrtrichtung gesehen hinter den Fördersternen mit einer Ausrichtung quer zur Vorfahrtrichtung der Erntevorrichtung angeordnet sind. Auch bei diesem Maispflücker werden die geschnittenen Halmgutstängel aber von Einzugsorganen einen Förderweg entlang bewegt.

Neuerdings wird in Fachkreisen des Pflanzenbaus darüber diskutiert, stängeliges Halmgut nicht mehr wie bisher in Reihenabständen von 75 cm bzw. 30 Inch anzubauen. Es werden Engsaaten oder Gleichstandssaaten in Erwägung gezogen und angebaut, die pflanzenbauliche Vorteile aufweisen. Die Reihen werden dann in Abständen von 37,5 cm/15 Inch, 20 Inch, 10 Inch oder im Abstand TwinTwenty gepflanzt. Daraus entsteht das Problem, dass die herkömmlichen Erntevorrichtungen, die für Reihenabstände von 75 cm/30 Inch gebaut sind, nicht mehr für eine optimale Ernte eingesetzt werden können. Die in Abständen von 75 cm bzw. 1,50 m angeordneten Halmteiler kollidieren teilweise mit den Pflanzenstängeln und biegen diese beiseite, bevor die Stängel geschnitten werden können, so dass diese Pflanzen von der Erntemaschine nicht mehr aufgenommen und verarbeitet werden. Bei anderen Pflanzenstängeln fallen die Fruchtstände durch den Anstoß des Halmteilers vom Stängel ab und direkt auf den Boden, von wo aus sie ebenfalls nicht mehr der Erntemaschine zugeführt werden können. Schließlich treffen die Pflanzenstängel an Stellen auf die Einzugseinheiten, an denen diese die Pflanzenstängel nicht optimal erfassen und abfördern können. Auch dadurch ergeben sich Erntegutverluste. Wenn Halmgutstängel vor ihrem Schnitt von der Erntevorrichtung seitlich weggedrückt werden, erfolgt der Schnitt solcher Halmgutstängel häufig sehr hoch am Stängel. Das führt zu einem unschönen ungleichmäßigen Stoppelbild. In den nicht abgeschnittenen Stängeln können außerdem Insekten überwintern, die den Aufwuchs der Folgesaat im nächsten Jahr auf dem Feld beeinträchtigen können. Die für die Engsaat und Gleichstandssaat unpassenden Teilarbeitsbreiten von 75 cm bzw. 1,50 m führen also zu nicht akzeptablen Erntegutverlusten. Das gilt auch für reihenunabhängig arbeitende Erntevorrichtungen, deren Halmteiler an das Reihenmaß von 75 cm / 1,50 m angepasst an der Erntevorrichtung angeordnet sind und deren Fördersterne an bestimmten Punkten in fortlaufender Reihe ankommende Halmgutstängel nicht optimal aufnehmen können.

Nun ist es möglich, Erntevorrichtungen zu verwenden, deren Teilarbeitsbreiten speziell an die jeweiligen Reihenabstände der Engsaaten und Gleichstandssaaten angepasst sind. Dies ist für einen Maschinenbetreiber jedoch sehr aufwendig, da er für jede unterschiedliche Reihenweite eine dazu passende Erntevorrichtung vorhalten müsste. Die unterschiedlichen Erntevorrichtungen beeinträchtigen die Flexibilität der Erntemaschine bei der Ernte und erhöhen die Kosten und den für die Bereitstellung erforderlichen Zeitaufwand erheblich.

Bei Erntevorrichtungen, die für die Ernte von Engsaaten konzipiert sind, treten weitere technische Nachteile auf. Aus Platzgründen kann hier häufig nur eine Einzugskette pro Pflückeinheit verwendet werden, wodurch sich die Abförderung verschlechtert. Die Erntevorrichtungen sind auch vergleichsweise schwer und teuer. Die prinzipiell reihenunabhängig arbeitenden Erntevorrichtungen haben prinzipbedingte Nachteile bei der Aufnahme von Lagermais, und sie haben erhöhte Verlustgrade in Beständen mit einem losen Fruchtstandansatz. Sie sind auch vergleichsweise aufwändig, teuer und schwer.

Es ist die Aufgabe der vorliegenden Erfindung, eine Erntevorrichtung zu schaffen, die bei verschiedenen Reihenabständen einsetzbar ist, ohne dadurch erhebliche Erntegutverluste in Kauf nehmen zu müssen. Das Stoppelbild soll unabhängig von der Reihenbreite möglichst gleichmäßig sein, und die Erntevorrichtung soll in ihrer technischen Komplexität überschaubar bleiben.

Die Aufgabe wird für eine gattungsgemäße Vorrichtung gelöst, indem die von den Einzugseinheiten definierten Teilarbeitsbreiten unterschiedliche Breitenmaße aufweisen.

Die unterschiedlichen Breitenmaße der Teilarbeitsbreiten ermöglichen es, die Erntevorrichtung so auszugestalten, dass die einzelnen Reihen des stängeligen Halmguts auch bei unterschiedlichen Reihenweiten über die Gesamtarbeitsbreite der Erntevorrichtung hinweg mit einem vergleichsweise geringen seitlichen Versatz zum vordersten Punkt des Förderwegs einer Teilarbeitsbreite in den Wirkbereich der Einzugseinheiten einlaufen. Während sich bei einem gleichen Breitenmaß der Teilarbeitsbreiten die Differenzen zwischen der Teilarbeitsbreite und dem jeweiligen Reihenabstand, in dem die zu erntenden Pflanzen stehen, über die Anzahl der Teilarbeitsbreiten und die daraus resultierende Gesamtarbeitsbreite der Erntevorrichtung so aufaddieren, dass über die Gesamtarbeitsbreite gesehen einzelne oder mehrere Reihen genau oder nahezu genau auf die Halmteilerspitze beziehungsweise den Grenzbereich zwischen zwei benachbarten Teilarbeitsbreiten zulaufen, während andere Reihen genau auf den vordersten Punkt des Förderweges einlaufen, führen die unterschiedlichen Breitenmaße der Teilarbeitsbreiten dazu, dass die Aufaddierung der gleichen Differenzwerte über die Gesamtarbeitsbreite hinweg aufgehoben ist. Je nachdem, wie die Breitenmaße der Teilarbeitsbreiten ausfallen, kann bei einer schmaleren Teilarbeitsbreite die Differenz zwischen dem Breitenmaß der Teilarbeitsbreite und dem Reihenabstand niedriger ausfallen als bei einer breiteren Teilarbeitsbreite, oder die Differenz beträgt Null, wenn eine Teilarbeitsbreite dem Reihenabstand einer zu erntenden Engsaat entspricht. Die Summe der über die Gesamtarbeitsbreite aufaddierten Differenzen von breiteren Teilarbeitsbreiten kann sogar reduziert werden, wenn die Erntevorrichtung eine oder mehrere schmalere Teilarbeitsbreiten aufweist, deren Breite geringer ist als der Reihenabstand des zu erntenden Halmguts.

Vorteilhaft sind die schmaleren Teilarbeitsbreiten über die Breite der Erntevorrichtung verteilt angeordnet, um über die Gesamtarbeitsbreite hinweg eine möglichst homogene Verteilung der Teilarbeitsbreiten zu erzielen. Das ist vorteilhaft, weil die Reihen des stängeligen Halmguts ja auch in einem über die Breite der abzuerntenden Fläche gleichmäßigen Reihenabstand angebaut sind.

Mit der erfindungsgemäß ausgestalteten Erntevorrichtung können verschiedene Reihenabstände geerntet werden, und zwar die bisherigen Reihenabstände von 75 cm /30 Inch genauso wie die Reihenabstände der Eng- und Gleichstandssaaten, ohne dass es zu deutlich erhöhten Erntegutverlusten kommt. Es müssen keine unterschiedlichen Maschinen für die unterschiedlichen Reihenabstände vorgehalten werden. Es genügt vielmehr eine Erntevorrichtung, die leicht und kostengünstig ausgeführt werden kann und an die unterschiedlichen Reihenweiten angepasst ist. Auch die bekannte reihenunabhängige Technik in Erntevorrichtungen kann an die unterschiedlichen Teilarbeitsbreiten angepasst werden, um bei unterschiedlichen Reihenweiten geringere Erntegutverluste zu erzeugen. Insgesamt ist aber die komplexe, teure und schwere reihenunabhängige Technik nicht mehr erforderlich, um unterschiedliche Reihenweiten ohne erhöhte Erntegutverluste mit nur einer einzigen Erntevorrichtung ernten zu können. Vielmehr können die Vorteile der reihenabhängigen Technik beispielsweise bei Lagermais voll ausgenutzt werden.

Die geringere Breite der schmaleren Teilarbeitsbreite führt bereits dazu, dass im Randbereich der schmaleren Teilarbeitsbreite einlaufende Pflanzenstängel um ein geringeres Maß in Querrichtung verschoben werden müssen, als es der Fall wäre, wenn die Einzugseinheiten an dieser Stelle ebenfalls eine breitere Teilarbeitsbreite aufwiesen. Durch die daraus resultierende geringere Querbeschleunigung ist das Risiko reduziert, dass Fruchtstände vom Halm abgeschüttelt werden könnten. Zudem stützen sich eng stehende Pflanzenreihen stärker gegenseitig ab, wodurch die Schüttelbewegungen bei einem Anstoß des Halmteilers weiter reduziert werden.

Nach einer Ausgestaltung der Erfindung setzt sich die Gesamtarbeitsbreite der Erntevorrichtung aus mehreren Systemen mit jeweils zwei breiteren und einer schmaleren Teilarbeitsbreiten zusammen. Ein System kann dabei durch die Abfolge
breit-breit-schmal
breit-schmal-breit und
schmal-breit-breit
der Teilarbeitsbreiten gebildet sein. Bei einer schmaleren Teilarbeitsbreite auf zwei breitere Teilarbeitsbreiten kann die zu engeren Pflanzreihen auftretende Differenz der breiteren Teilarbeitsbreiten so kompensiert werden, dass bei keiner zu erntenden Pflanzenreihe erhöhte Erntegutverluste auftreten.

Nach einer Ausgestaltung der Erfindung weist die Erntevorrichtung einen Querrahmen auf, an dem die Einzugseinheiten als einheitliche Module in Abständen zueinander befestigt sind, aus denen sich die unterschiedlichen Breitenmaße der Teilarbeitsbreiten ergeben. Die Module für die Einzugseinheiten sind Bestandteil eines Baukastens, aus dem die Erntevorrichtung zusammengesetzt wird. Der Querrahmen kann dazu genutzt werden, Einzugseinheiten wahlweise in gleichen oder in unterschiedlichen Abständen an dem Querrahmen zu befestigen. Bei den unterschiedlichen Abständen können bei der Montage der Module auch mehrere verschiedene unterschiedliche Abstände herstellbar sein. Der Antriebsstrang zum Antrieb der Einzugseinheiten muss natürlich ebenfalls so flexibel konstruiert sein, dass mit wenigen Modulteilen die unterschiedlichen Teilarbeitsbreiten herstellbar sind. Auch die Einzugseinheiten müssen so schmal gebaut sein, dass sie auch bei geringen Reihenabstanden einer Engsaat noch ausreichend Raum für den Pflückspalt und die Förderorgane der Einzugseinheiten frei lassen.

Nach einer Ausgestaltung der Erfindung weisen die Einzugseinheiten Kettenförderer auf, deren daran befestigte Mitnehmer beidseitig eines jeden Förderwegs einer Teilarbeitsbreite in einer gemeinsamen Ebene angeordnet sind. Die beidseitig eines Förderwegs angeordneten Kettenförderer ermöglichen eine hohe Prozesssicherheit beim Einzug und der Abförderung der Stängel und der Fruchtstände. Während die Mitnehmer vorteilhaft in einer Ebene parallel zum und oberhalb eines Pflückspaltes umlaufen, können die Antriebswellen der Umlenkräder der Kettenförderer zur Ebene des Pflückspaltes in einem Winkel angestellt sein, beispielsweise um 45° zueinander geneigt, woraus sich eine insgesamt schmalere Baubreite der Einzugseinheiten ergibt. In diesem Fall ist es vorteilhaft, die Mitnehmer ebenfalls in einem Winkel von beispielsweise 45°zur Ebene des Kettenförderers anzustellen, so dass diese den Pflückspalt weiterhin plan überstreichen können. Die Mitnehmer, die um das hintere Umlenkrad umgelaufen sind, laufen dann zur Ebene des Pflückspalts aufrecht stehend wieder nach vorne, was weitere Baubreite spart. Dadurch ist es möglich, durch die Anpassung der Einzugseinheiten auch bei sehr schmalen Reihenabständen noch beidseitige Kettenförderer entlang eines Förderweges zu realisieren.

Nach einer Ausgestaltung der Erfindung sind die Einzugseinheiten mit Abdeckhauben abgedeckt, die eine unterschiedliche Breite quer zur Förderrichtung aufweisen, wobei die schmaleren Teilarbeitsbreiten bei den Einzugseinheiten ausgebildet sind, die eine schmalere Abdeckhaube aufweisen. Es ist möglich, die unterschiedlich breiten Teilarbeitsbreiten insbesondere durch unterschiedlich breite Abdeckhauben zu realisieren. So kann unter den Abdeckhauben jeweils ein baugleiches Modul einer Einzugseinheit verbaut sein. Wenn ein Typ einer Abdeckhaube eine geringere Breite aufweist als ein anderer Typ einer Abdeckhaube, ergibt sich dadurch im Bereich der Abdeckhaube mit der geringeren Breite auch eine schmalere Teilarbeitsbreite.

Nach einer Ausgestaltung der Erfindung weist die Erntevorrichtung eine schmale Teilarbeitsbreite von 15 Inch und eine breite Teilarbeitsbreite von 22,5 Inch auf. Bei einer solchen Reihenaufteilung in einem System mit zwei breiten und einer schmalen Teilarbeitsbreite ist es beispielsweise möglich, Pflanzenbestände mit den Reihenabständen der Pflanzenreihen von 10 Inch, 15 Inch, 20 Inch, TwinTwenty und 30 Inch ohne Inkaufnahme zusätzlicher Erntegutverluste abzuernten.

Es wird ausdrücklich darauf hingewiesen, dass die vorstehend beschriebenen Ausgestaltungen der Erfindung jeweils für sich, aber auch in Kombinationen gemäss den Ansprüchen mit dem Gegenstand des Hauptanspruchs kombiniert werden können, soweit dem keine technisch zwingenden Hindernisse entgegen stehen.

Weitere Abwandlungen und Ausgestaltungen der Erfindung lassen sich der nachfolgenden gegenständlichen Beschreibung und den Zeichnungen entnehmen. Die Erfindung soll nun anhand eines Ausführungsbeispiels näher erläutert werden. Es zeigen:
- Fig. 1:: eine nur durch die Darstellung der Abdeckhauben skizzierte Erntevorrichtung mit Pflanzenreihen in einem Abstand von 10 Inch,
- Fig. 2:: die in Fig. 1 gezeigte Erntevorrichtung mit einem Pflanzenreihenabstand von 15 Inch,
- Fig. 3:: eine Ansicht von vorne auf die in Fig. 2 gezeigte Erntevorrichtung, die mit den Halmteilerspitzen in einen Maisbestand mit einem Reihenabstand von 15 Inch hineingefahren ist,
- Fig. 4:: die in Fig. 1 gezeigte Erntevorrichtung mit einem Pflanzenreihenabstand von 20 Inch,
- Fig. 5:: die in Fig. 1 gezeigte Erntevorrichtung mit einem Pflanzenreihenabstand von TwinTwenty,
- Fig. 6:: die in Fig. 1 gezeigte Erntevorrichtung mit einem Pflanzenreihenabstand von 30 Inch, und
- Fig. 7:: eine Erntevorrichtung mit einer Gesamtarbeitsbreite von 9,40 m/18 Reihen.

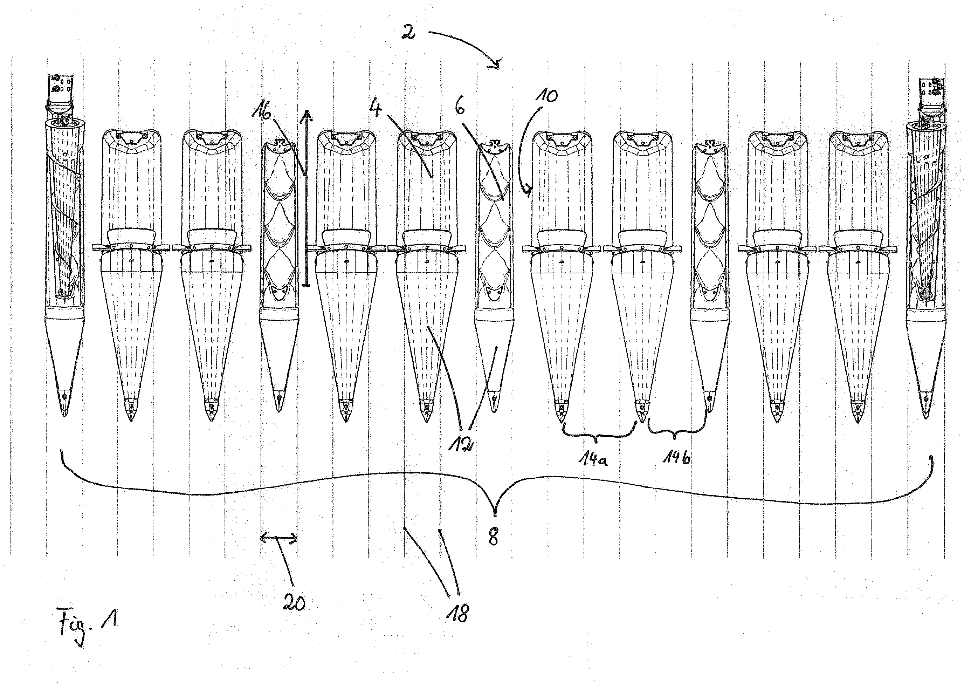

In Fig. 1 ist eine schematische Darstellung einer Erntevorrichtung 2 gezeigt. In der schematischen Darstellung sind aus Gründen der zeichnerischen Vereinfachung nur die breiten Abdeckhauben 4 sowie die schmalen Abdeckhauben 6 in einer Einbauposition gezeigt, in der sie bei einer erfindungsgemäßen Erntevorrichtung 2 positioniert wären. In der Zeichnung fehlt die Darstellung der Pflückspalte, des Rahmens, der hinter den Abdeckhauben quer angeordneten Querförderschnecke und des Montagerahmens, mit dem die Erntevorrichtung 2 an einem Schrägförderer eines Mähdreschers befestigbar ist.

In dem in Fig. 1 gezeigten Ausführungsbeispiel verfügt die Erntevorrichtung 2 über insgesamt 13 Abdeckhauben. Den Abdeckhauben 4, 6 ist jeweils ein Halmteiler 12 zugeordnet, der in Fahrtrichtung vor den Abdeckhauben 4, 6 angeordnet ist und sich in Fahrtrichtung zuspitzt. Die Abdeckhauben definieren in ihrer Gesamtheit eine Gesamtarbeitsbreite 8 der Erntevorrichtung 2. Im Ausführungsbeispiel kann die Gesamtarbeitsbreite beispielsweise 6,35 m bei 12 Reihen bzw. Teilarbeitsbreiten betragen. Die Spitzen der Halmteiler 12 definieren die Grenzen einer jeweiligen Teilarbeitsbreite 14, aus der das dort anfallende Halmgut dem jeweils zugeordneten Förderweg 16 zugeleitet wird.

In Fig. 1 ist erkennbar, dass die Erntevorrichtung 2 je nachdem, ob eine breite Abdeckhaube 4 oder eine schmale Abdeckhaube 6 verwendet ist, unterschiedlich breite Teilarbeitsbreiten 14a, 14b aufweist. Durch die größere Breite der Abdeckhauben 4 ist die von diesen begrenzte Teilarbeitsbreite 14a breiter als die Teilarbeitsbreite 14b, die zumindest an einer Seite von einer schmalen Abdeckhaube 6 begrenzt wird.

Unter den Abdeckhauben 4, 6 befinden sich die Einzugseinheiten 10. Für jeden Förderweg 16 ist unter den Abdeckhauben 4, 6 im Ausführungsbeispiel auf jeder Seite ein Kettenförderer angeordnet, der mit außen hervorstehenden Mitnehmern versehen ist, die an dem Förderweg 16 in Abförderrichtung entlang streichen und dabei die Erntegutstängel und bereits vom Erntegutstängel abgetrennte Fruchtstände nach hinten abfördern. Die Förderrichtung ist in Fig. 1 durch den entsprechenden Pfeil angedeutet. Demgemäß befinden sich im Ausführungsbeispiel unter jeder Abdeckhaube 4, 6 zwei Kettenförderer, die jeweils dem links und rechts von der betreffenden Abdeckhaube liegenden Förderweg zugeordnet sind. Bei 12 Förderwegen 16 im Ausführungsbeispiel befinden sich also unter den Abdeckhauben 4, 6 insgesamt 24 Kettenförderer.

In dem in Fig. 1 gezeigten Ausführungsbeispiel sind die Erntegutreihen 18 mit einem Reihenabstand dargestellt, der einem Maß von 10 Inch entspricht. Die Erntegutreihen 18 sind durch parallel verlaufende Linien angedeutet. Wenn die Erntevorrichtung 2 in der in Fig. 1 dargestellten Lage relativ zu dem Planzenreihen in den stehenden Bestand des Ernteguts hineinbewegt wird, ergeben sich die in Fig. 1 erkennbaren Auftreffpunkte der Stängel des Halmguts an den Halmteilern 12. Anhand der Darstellung in Fig. 1 ist erkennbar, dass sämtliche Erntegutreihen 18 bei den ausgebildeten Teilarbeitsbreiten 14a, 14b mit einem nur geringen seitlichen Versatz zum Förderweg 16 auf einen entsprechenden Halmteiler 12 treffen. Eventuelle Schüttelverluste aus der Querbeschleunigung eines Stängels nach der Kollision mit einem Halmteiler 12 und dem anschließenden seitlichen Wegbiegen bei einer weiteren Vorfahrt der Erntevorrichtung 2 sind deshalb gering. Es ist aber auch so, dass trotz des sehr engen Reihenabstandes 20 von nur 10 Inch auf jeden Förderweg 16 nur zwei Reihen 18 des Ernteguts zulaufen. Da die in einer Teilarbeitsbreite 14a, 14b einlaufenden Stängel der Erntegutreihen 18 jeweils aufeinander zugeneigt werden, nachdem sie an einen Halmteiler 12 angestoßen sind, können sich die Halmgutstängel jeweils gegenseitig abstützen, wodurch die Schüttelverluste und das Risiko des Wegknickens von ganzen Halmgutstängeln 22 zusätzlich verringert werden.

In Fig. 1 ist auch erkennbar, dass die schmalen und breiten Abdeckhauben 4, 6 so miteinander kombiniert sind, dass zwei breite Abdeckhauben 4 zusammen mit einer schmalen Abdeckhaube 6 ein gemeinsames System bilden. In der in Fig. 1 dargestellten Erntevorrichtung 2 sind somit abgesehen von einer schmalen Abdeckhaube 6 am seitlichen Rand insgesamt vier Systeme verwendet, um damit die Gesamtarbeitsbreite 8 zu bilden. Die Abdeckhauben 4, 6 sind in den gezeigten Systemen jeweils in der Kombination breit-breit-schmal benutzt. Es sind auch DreierKombinationen breit-schmal-breit oder schmal-breit-breit möglich.

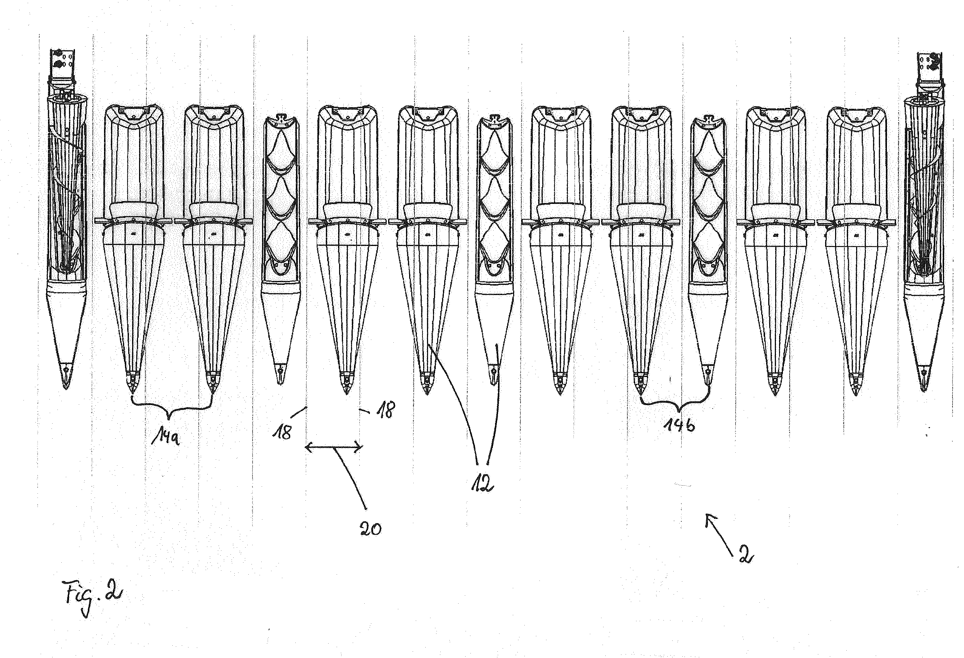

In Fig. 2 ist die in Fig. 1 gezeigte Erntevorrichtung 2 mit einem Pflanzenreihenabstand 20 von 15 Inch gezeigt. In Fig. 2 ist erkennbar, dass in der gezeigten Anordnung in die breiten Teilarbeitsbreiten 14a zwei Pflanzenreihen 18 einlaufen, während in die schmalen Teilarbeitsbreiten 14b jeweils nur eine Pflanzenreihe einläuft. Gleichwohl ist es so, dass keine der Erntegutreihen 18 genau auf die Spitze der Halmteiler 12 zuläuft. Auch bei einem Reihenabstand 20 von 15 Inch ist die in Fig. 1 und 2 dargestellte Erntevorrichtung 2 gut brauchbar, ohne dass dabei ein Risiko von erhöhten Erntegutverlusten besteht.

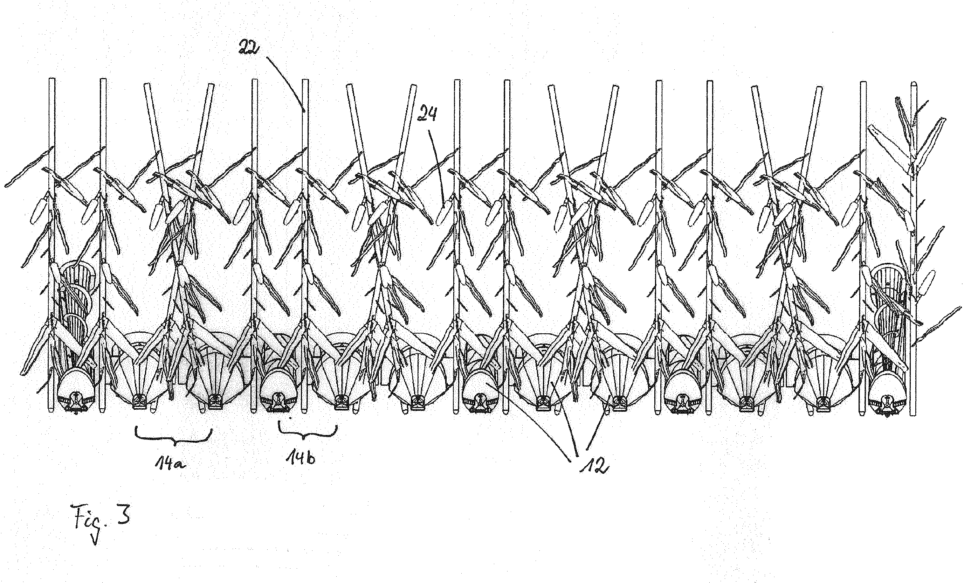

In Fig. 3 ist eine Ansicht von vorne auf die in Fig. 2 gezeigte Erntevorrichtung 2 gezeigt, bei der die Halmteiler 12 und ihre Spitzen gezeigt sind, wenn sie in einen Maisbestand mit einem Reihenabstand von 15 Inch hineingefahren werden. Aus der Darstellung ist erkennbar, dass die Halmgutstängel 22, die in die schmalen Teilarbeitsbreiten 14b einlaufen, praktisch genau auf den Förderweg 16 zwischen den zugehörigen Einzugseinheiten 10 zulaufen. Die Erntegutreihen 18, die auf eine breitere Teilarbeitsbreite 14a zulaufen, werden von den Halmteilern 12 während des Vorschubs der Erntevorrichtung 2 in den stehenden Bestand leicht zur Seite gedrückt. Es ist in der Fig. 3 erkennbar, dass die jeweiligen Halmgutstängel 22 aufeinander zugedrückt werden, so dass sich die Halmgutstängel 22 gegenseitig abstützen können. Dadurch wird die Schüttelbewegung, die sich auf die Fruchtstände 24 lockernd auswirken könnte, begrenzt.

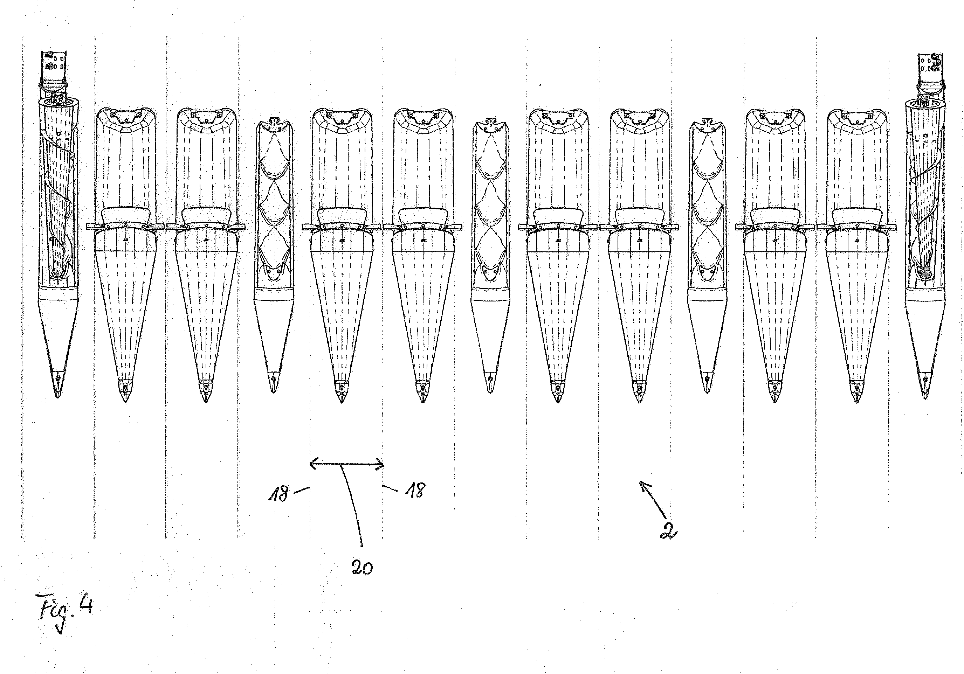

In Fig. 4 ist die in Fig. 1 gezeigte Erntevorrichtung mit Pflanzenreihenabständen 20 gezeigt, die einem Maß von 20 Inch entsprechen. Bei diesem Reihenabstand 20 laufen alle Erntegutreihen 18 ziemlich genau auf den jeweiligen Förderweg 16 zwischen den Abdeckhauben 4, 6 zu.

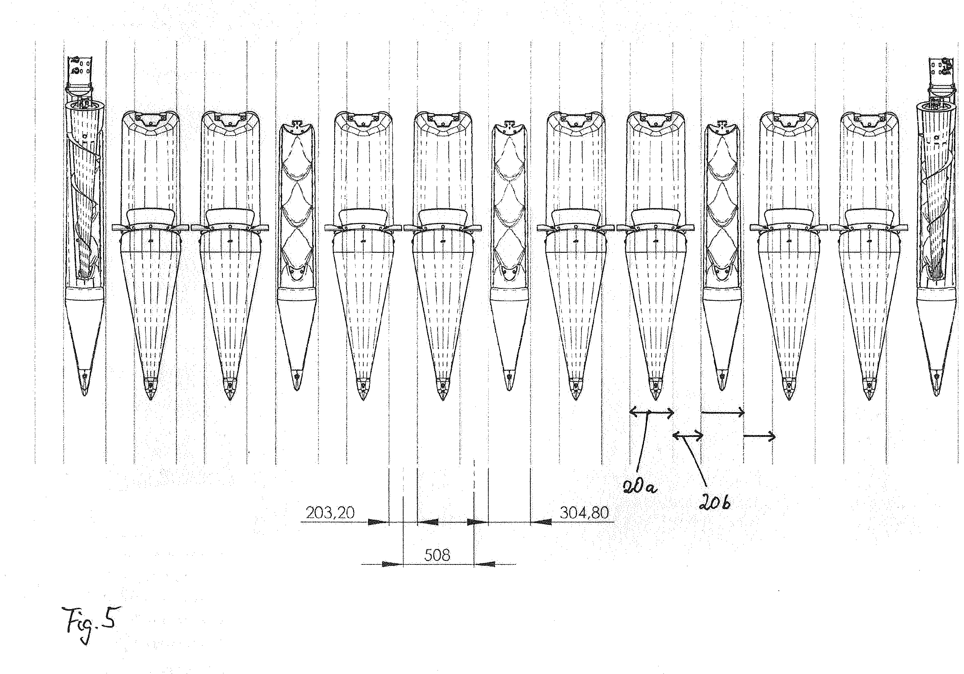

In Fig. 5 ist die in Fig. 1 gezeigte Erntevorrichtung 2 mit einem Reihenabstand 20 nach dem Muster TwinTwenty gezeigt. Die Maße des entsprechenden Reihenabstandes und der Abdeckhauben 4, 6 sind in Fig. 5 für das Ausführungsbeispiel in Millimetern eingetragen. Auch bei der Ernte eines Halmgutbestandes mit dem Reihenabstand 20 nach dem Muster TwinTwenty laufen immer nur maximal zwei Erntegutreihen 18 in einer Teilarbeitsbreite 14a, 14b auf einen zugehörigen Förderweg 16 zu. Hier stützen sich die Pflanzen ebenfalls durch das aufeinander Zuneigen gegenseitig ab.

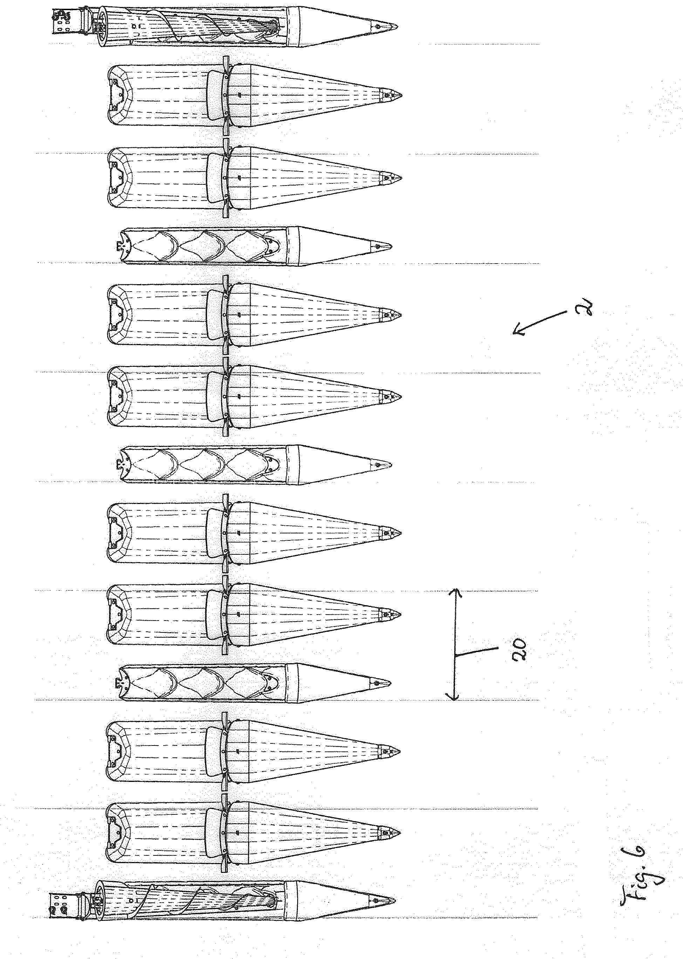

In Fig. 6 ist schließlich die in Fig. 1 gezeigte Erntevorrichtung 2 mit einem Pflanzreihenabstand 20 von 30 Inch gezeigt. Dieser Pflanzreihenabstand entspricht dem heute noch üblichen Abstandsmaß. In der Fig. 6 ist erkennbar, dass von den zwölf Teilarbeitsbreiten 14a, 14b nur acht Teilarbeitsbreiten 14a, 14b eine Erntegutreihe 18 aufnehmen. Auch diese Erntegutreihen laufen allerdings bei dem Reihenabstand 20 von 30 Inch so in die Teilarbeitsbreiten 14a, 14b ein, dass diese nahezu ohne einen seitlichen Versatz auf den vordersten Punkt des jeweiligen Förderweges 16 der zugehörigen Teilarbeitsbreite 14a, 14b treffen.

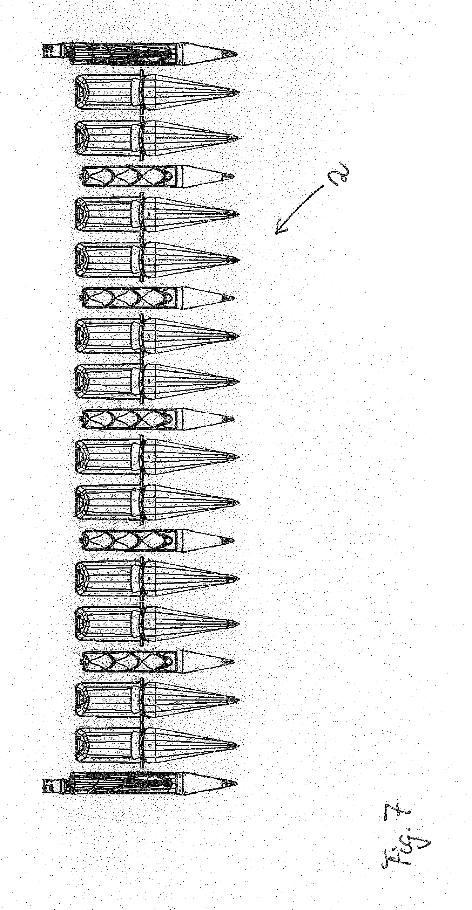

In Fig. 7 ist ein abgewandeltes Ausführungsbeispiel einer Erntevorrichtung 2 gezeigt, das achtzehn Teilarbeitsbreiten 14a, 14b mit einer Gesamtarbeitsbreite von 9,40 m aufweist. In dieser Vorrichtung sind insgesamt sechs Systeme von schmalen Abdeckhauben 6 und breiten Abdeckhauben 4 abzüglich einer seitlich begrenzenden zusätzlichen schmalen Abdeckhaube 6 verwendet. Aus der Fig. 7 ist erkennbar, dass unter Verwendung der gleichen Baumodule Erntevorrichtungen 12 in beliebigen Arbeitsbreiten herstellbar sind. Eine Erntevorrichtung 2 kann also nach Wahl schmaler oder breiter als die in den Figuren 1 bis 7 gezeigten Ausführungsbeispiele ausgeführt werden, wenn der Rahmen der entsprechenden Erntevorrichtung 2 entsprechend kürzer oder länger ausgeführt ist. Es müssen nur entsprechend zusätzliche Systeme bzw. breite Abdeckhauben 4 und schmale Abdeckhauben 6 mit darunter befindlichen Einzugseinheiten 10 angeordnet werden.

Die Erfindung ist nicht auf die vorstehenden Ausführungsbeispiele beschränkt. Dem Fachmann bereitet es keine Schwierigkeiten, die Ausführungsbeispiele auf eine ihm geeignet erscheinende Weise abzuwandeln, um sie an einen konkreten Anwendungsfall anzupassen.

## Patentansprüche

1. Erntevorrichtung (2) zum Schneiden und Einziehen von stängeligem Halmgut (22), wobei das Einziehen entlang eines Förderweges (16) mittels mehrerer nebeneinander angeordneter Einzugseinheiten (10) erfolgt, die zusammen eine Gesamtarbeitsbreite (8) der Erntevorrichtung (2) und einzeln oder mit mehreren Einzugseinheiten (10) für einen jeweiligen Förderweg (16) eine Teilarbeitsbreite (14) definieren, und zum Abtrennen von Fruchtständen (24) von den Halmen des stängeligen Halmguts (22), wobei das Abtrennen der Fruchtstände (24) in Pflückspalten erfolgt, die jeweiligen Einzugseinheiten (10) zugeordnet sind, **dadurch gekennzeichnet, dass** die von den Einzugseinheiten (10) definierten Teilarbeitsbreiten (14a, 14b) unterschiedliche Breitenmaße aufweisen.

2. Erntevorrichtung (2) nach Anspruch 1, **dadurch gekennzeichnet, dass** sich die Gesamtarbeitsbreite (8) der Erntevorrichtung (2) aus mehreren Systemen mit jeweils zwei breiteren und einer schmaleren Teilarbeitsbreiten (14a, 14b) zusammensetzt.

3. Erntevorrichtung (2) nach Anspruch 1 oder 2, **dadurch gekennzeichnet, dass** die Erntevorrichtung (2) einen Querrahmen aufweist, an dem die Einzugseinheiten (10) als einheitliche Module in Abständen zueinander befestigt sind, aus denen sich die unterschiedlichen Breitenmaße der Teilarbeitsbreiten (14) ergeben.

4. Erntevorrichtung (2) nach Anspruch 3, **dadurch gekennzeichnet, dass** die Einzugseinheiten (10) Kettenförderer aufweisen, deren daran befestigte Mitnehmer beidseitig eines jeden Förderwegs (16) einer Teilarbeitsbreite (14) in einer gemeinsamen Ebene angeordnet sind.

5. Erntevorrichtung (2) nach einem der vorhergehenden Ansprüche, **dadurch gekennzeichnet, dass** die Einzugseinheiten (10) mit Abdeckhauben (4, 6) abgedeckt sind, die eine unterschiedliche Breite quer zur Förderrichtung aufweisen, wobei die schmaleren Teilarbeitsbreiten (14) bei den Einzugseinheiten (10) ausgebildet sind, die eine schmalere Abdeckhaube (6) aufweisen.

6. Erntevorrichtung (2) nach einem der vorhergehenden Ansprüche, **dadurch gekennzeichnet, dass** die Erntevorrichtung (2) eine schmale Teilarbeitsbreite (14) von 15 Inch und eine breite Teilarbeitsbreite (14) von 22,5 Inch aufweist

## Claims

1. Harvesting device (2) for cutting and collecting stalked crops (22), the collecting taking place along a conveying path (16) by means of several collection units (10) arranged side by side, which together define a total working width (8) of the harvesting device (2) and individually, or together with a plurality of collection units (10), define a partial working width (14) for a relevant conveying path (16), and for separating infructescences (24) from the stalks of the stalked crop (22), the separating of the infructescences (24) taking place in picking gaps which are assigned to respective collection units (10), **characterised in that** the partial working widths (14a, 14b) defined by the collection units (10) have different width dimensions.

2. Harvesting device (2) according to claim 1, **characterised in that**
the total working width (8) of the harvesting device (2) consists of a plurality of systems, each of which have two wider and one narrower partial working widths (14a, 14b).

3. Harvesting device (2) according to either claim 1 or claim 2, **characterised in that**
the harvesting device (2) has a transverse frame to which the collection units (10) are fastened as unitary modules at intervals from one another, from which the different width dimensions of the partial working widths (14) result.

4. Harvesting device (2) according to claim 3, **characterised in that**
the collection units (10) have chain conveyors, the carriers attached thereto being arranged on both sides of each conveying path (16) of a partial working width (14) in a common plane.

5. Harvesting device (2) according to any of the preceding claims, **characterised in that**
the collection units (10) are covered by covering hoods (4, 6) which have a different width transversely to the conveying direction, the narrower partial working widths (14) being formed in the collection units (10) that have a narrower covering hood (6).

6. Harvesting device (2) according to any of the preceding claims, **characterised in that**
the harvesting device (2) has a narrow partial working width (14) of 15 inches, and a wide partial working width (14) of 22.5 inches.

## Revendications

1. Dispositif de récolte (2) pour couper et ramasser de la paille sur tige (22), dans lequel le ramassage s'effectue le long d'une voie de transport (16) au moyen de plusieurs unités de ramassage disposées côte à côte (10) qui définissent conjointement une largeur de travail totale (8) du dispositif de récolte (2) et individuellement ou avec plusieurs unités de ramassage (10) pour une voie de transport respective (16) une largeur de travail partielle (14), et pour séparer des fruits (24) des tiges de la paille sur tige (22), dans lequel la séparation des fruits (24) s'effectue dans des fentes de cueillette qui sont affectées à des unités de ramassage respectives (10), **caractérisé en ce que** les largeurs de travail partielles (14a, 14b) définies par les unités de ramassage (10) présentent des largeurs différentes.

2. Dispositif de récolte (2) selon la revendication 1, **caractérisé en ce que** la largeur de travail totale (8) du dispositif de récolte (2) est constituée de plusieurs systèmes comportant respectivement deux largeurs de travail partielles (14a, 14b) plus grandes et une plus étroite.

3. Dispositif de récolte (2) selon la revendication 1 ou 2, **caractérisé en ce que** le dispositif de récolte (2) présente un châssis transversal au niveau duquel les unités de ramassage (10) sont fixées en tant que modules unitaires à distance les unes des autres, ce qui donne les largeurs différentes des largeurs de travail partielles (14).

4. Dispositif de récolte (2) selon la revendication 3, **caractérisé en ce que** les unités de ramassage (10) présentent des systèmes de transport à chaîne, dont des éléments d'entraînement fixés sur ceux-ci de part et d'autre de chaque voie de transport (16) d'une largeur de travail partielle (14) sont disposés dans un plan commun.

5. Dispositif de récolte (2) selon l'une quelconque des revendications précédentes, **caractérisé en ce que** les unités de ramassage (10) sont recouvertes de capots (4, 6) qui présentent une largeur différente perpendiculairement à la direction de transport, dans lequel les largeurs de travail partielles (14) plus étroites sont formées dans les unités de ramassage (10) qui présentent un capot (6) plus étroit.

6. Dispositif de récolte (2) selon l'une quelconque des revendications précédentes, **caractérisé en ce que** le dispositif de récolte (2) présente une largeur de travail partielle étroite (14) de 15 pouces et une grande largeur de travail partielle (14) de 22,5 pouces.
